# EUROPÄISCHE PATENTSCHRIFT

(11) **EP 2 439 138 B1**
(45) Veröffentlichungstag und Bekanntmachung des Hinweises auf die Patenterteilung: **12.06.2019**
(21) Anmeldenummer: 11008130.4
(22) Anmeldetag: 07.10.2011
(51) Int. Cl.: B64C 3/42, B64C 39/06, B64C 3/16, B64C 3/10, B64C 3/56, B64C 3/54

(54) **Fluggerät mit variabler Geometrie**
Flying device with variable geometry
Aéronef à géométrie variable

(30) Priorität: 11.10.2010 DE 102010048139
(43) Veröffentlichungstag der Anmeldung: 11.04.2012
(73) Patentinhaber: Airbus Defence and Space GmbH, 85521 Ottobrunn (DE)
(72) Erfinder: Seifert, Jost, Dr., 85077 Manching (DE)
(74) Vertreter: Isarpatent

(56) Entgegenhaltungen:
- GB-A- 820 009
- GB-A- 1 075 403
- GB-A- 2 010 195
- US-A- 2 166 564
- US-A- 2 925 233
- US-A- 4 538 779
- US-A- 5 072 894
- US-A- 5 988 563

## Beschreibung

Die vorliegende Erfindung betrifft ein Fluggerät mit variabler Geometrie zur Anpassung des Flugverhaltens nach dem Oberbegriff des Anspruchs 1, und ferner die Verwendung eines derartigen Fluggerätes bzw. ein Verfahren zur Veränderung der Geometrie des Fluggerätes während des Fluges.

Aus dem Stand der Technik sind gattungsgemäße Flugzeuge als so genannte Schwenkflügelflugzeuge, kurz "Schwenkflügler", bekannt (z. B. "Grumman F-14 Tomcat", "Mikojan-Gurewitsch MiG-23 und MiG-27" etc.).

Dabei geht aus der US 4 538 779 A ein Fluggerät mit variabler Geometrie gemäß des Oberbegriffs des 1. Anspruchs hervor.

Diese bekannten Fluggeräte umfassen einen Rumpf mit einem Paar von beiderseits in Querrichtung davon abstehenden Tragflügeln, die jeweils einen stationär bezüglich des Rumpfes angeordneten inneren Tragflügelabschnitt und einen sich daran anschließenden, um eine Schwenkachse verschwenkbaren äußeren Tragflügelabschnitt aufweisen, wobei die Schwenkachse im Wesentlichen in Vertikalrichtung des Fluggerätes orientiert ist.

Bei einem solchen Schwenkflügler kann mittels der Verschwenkbarkeit der äußeren Tragflügelabschnitte die Pfeilung der Tragflügel und somit die Geometrie ("Konfiguration") während des Fluges vorteilhaft zur Anpassung des Flugverhaltens (Luftwiderstand, Auftrieb, Wendigkeit etc.) variiert werden, um damit z. B. den jeweiligen Anforderungen in verschiedenen Flugsituationen (z. B. Start und Landung, Reiseflug, militärischer Kampfeinsatz etc.) Rechnung zu tragen. Bekanntlich ist eine eher geringe Pfeilung z. B. für einen energieeffizienten Flug über größere Distanzen (Reiseflug) günstig, wohingegen eine größere Pfeilung insbesondere zur Reduzierung des Luftwiderstandes bei besonders schnellem Flug Vorteile bringt.

Die bekannten Schwenkflügelflugzeuge besitzen jedoch auch Nachteile. Abgesehen von der Notwendigkeit eines zur Verschwenkung der Tragflügel zu installierenden und somit das Gewicht erhöhenden Verschwenkungsantriebes werden beispielsweise im militärischen Bereich zunehmend Anforderungen hinsichtlich einer "radarsignaturarmen Form" gestellt, um eine Radarerfassung bzw. -ortung des Fluggerätes zu verhindern oder zumindest zu erschweren. Daneben wird auch in diesem Anwendungsbereich gefordert, dass innerhalb einer Flugmission sowohl ein energieeffizienter Reiseflug als auch ein wendiges und agiles Flugverhalten wie bei einem Kampfflugzeug ermöglicht sein soll. Die Entwurfsziele für ein Fluggerät, das diese Anforderungen erfüllt, sind komplementär. Ein besonders energieeffizienter Reiseflug ist nur mit Tragflügeln großer Streckung (schlanke Flügel) möglich. Derartige Tragflügel reduzieren allerdings die Wendigkeit durch das relativ große Massenträgheitsmoment beispielsweise um die Längsachse des Fluggerätes. Außerdem erschweren schlanke Tragflügel die Konstruktion einer geeigneten Verschwenkungskinematik (für eine vorgegebene Tragflügelfläche).

Es ist eine Aufgabe der vorliegenden Erfindung, ein alternatives Konzept für ein Fluggerät mit variabler Geometrie anzugeben, mittels welchem eine Vereinfachung eines "Verschwenkungsantriebes" ermöglicht ist und der vorstehend erläuterte Zielkonflikt besser handhabbar ist, um damit z. B. den Anwendungsbereich des Fluggerätes zu erweitern.

Eine erfindungsgemäße Vorrichtung wird durch die Merkmale des 1. Anspruchs beansprucht. Ein erfindungsgemäßes Verfahren beinhaltet die Merkmale des Anspruchs 10. Weitere Aspekte und Ausführungsbeispiele der Erfindung sind in den abhängigen Ansprüchen definiert. Die Schwenkachse ist dabei in einer Richtung orientiert, die um maximal 40°, bevorzugt maximal 20°, von der Längsrichtung (entsprechend der Flugrichtung) des Fluggerätes abweicht.

Beispielsweise kann die Schwenkachse somit im Wesentlichen in Längsrichtung des Fluggerätes orientiert sein. Damit sind insbesondere Orientierungen gemeint, die um maximal 20°, bevorzugt maximal 10° von der Längsrichtung des Fluggerätes abweichen.

Falls die Schwenkachse nicht exakt in Längsrichtung orientiert ist, so ist gemäß einer bevorzugten Ausführungsform vorgesehen, dass ein Neigungswinkel der Schwenkachse bezüglich der Horizontalebene kleiner als ein Neigungswinkel bezüglich derjenigen Vertikalebene ist, welche durch die Längsrichtung und die Vertikalrichtung aufgespannt wird.

Durch die Verschwenkbarkeit der äußeren Tragflügelabschnitte um die mehr oder weniger in Längsrichtung orientierten Schwenkachsen ist es vorteilhaft möglich, mit ein und demselben Fluggerät Flugmissionen zu erfüllen, für die ansonsten mindestens zwei unterschiedliche Flugzeugkonfigurationen erforderlich wären. Zum einen die energieeffiziente Konfiguration mit unverschwenkten äußeren Tragflügelabschnitten und somit "gestreckten" Tragflügeln und zum anderen (wenigstens) eine wendigere Konfiguration mit verschwenkten äußeren Tragflügelabschnitten und hierbei "effektiv verkürzten" Tragflügeln.

Weitere besondere Vorteile der Erfindung bestehen darin, dass das Fluggerät mit einer geringen Radarsignatur (insbesondere auch im verschwenkten Zustand der Tragflügel) gestaltet werden kann und dass der Schwenkmechanismus keinen eigens zum Verschwenken vorgesehenen Verschwenkungsantrieb aufweisen muss. Vielmehr kann die Verschwenkung unter Ausnutzung von aerodynamischen Kräften bewerkstelligt werden, die während des Fluges an den äußeren Tragflügelabschnitten wirken.

Die Begriffe "innere" (Tragflügelabschnitte) und "äußere" (Tragflügelabschnitte) beziehen sich auf die Anordnung im unverschwenkten Zustand, bei welchem die äußeren Tragflügelabschnitte sich in Querrichtung betrachtet weiter außen als die inneren Tragflügelabschnitte befinden. Diese Bezeichnungen für die beiden verschiedenen Tragflügelabschnitte werden der Einfachheit halber auch für den verschwenkten Zustand verwendet, wenngleich diese Bezeichnungen dann insofern nicht ganz treffend sind, als der "äußere Tragflügelabschnitt" in einem verschwenkten Zustand in Querrichtung betrachtet etwa in gleicher Position wie der "innere Tragflügelabschnitt" angeordnet sein kann.

Der Begriff "Rumpf" ist im Sinne der Erfindung sehr breit zu verstehen als der in Querrichtung betrachtet zentrale Bereich des Fluggerätes. In einer Ausführungsform umfasst das Fluggerät einen "herkömmlichen Rumpf' in dem Sinne, dass dieser sich klar von den beiderseits davon abstehenden Tragflügeln abgrenzen bzw. unterscheiden lässt (Ein typisches Beispiel hierfür ist ein in Längsrichtung etwa "zigarrenförmig" langgestreckter Rumpf). In einer anderen Ausführungsform, die in der Fachwelt als "Nurflüglerkonfiguration" bekannt ist, umfasst das Fluggerät keinen ausgewiesenen bzw. klar von den beiderseits abstehenden Tragflügeln abgrenzbaren Rumpf. In diesem Fall besteht ein fließender Übergang zwischen Rumpf und Tragflügeln oder wird der Rumpf im Extremfall durch die in Querrichtung betrachtet inneren Enden der inneren Tragflügelabschnitte selbst gebildet. Bei letzterem "Nurflüglertyp" kann als Rumpf die in Querrichtung betrachtete Fluggerätmitte angesehen werden.

Das neuartige Konzept eignet sich insbesondere auch für militärische Anwendungen, sei es als ein unbemanntes Fluggerät oder als ein bemanntes Fluggerät.

In einer bevorzugten Ausführungsform umfasst das Fluggerät eine Steuereinrichtung zur Ansteuerung einer automatischen Verschwenkung der äußeren Tragflügelabschnitte während des Fluges infolge eines Ansteuerbefehls und/oder in Abhängigkeit von wenigstens einem Flugzustandsparameter.

Eine solche Steuereinrichtung kann einen Teil einer so genannten Avionik (Flugsteuerungssystem) darstellen oder damit verbunden sein, um zur Realisierung der automatischen Verschwenkung z. B. an den äußeren Tragflügelabschnitten vorgesehene Steuerelemente wie z. B. Ruder ("Querruder") oder andere verstellbare, aerodynamisch wirksame Tragflügelteile (z. B. Klappen an Tragflügeloberseite oder -unterseite) zu verstellen.

Im Falle eines bemannten Fluggerätes können entsprechende Ansteuerbefehle zur Initiierung der automatischen Verschwenkung durch entsprechende Bedienungsbefehle eines Piloten bereitgestellt werden. Bei einem unbemannten Fluggerät können Ansteuerbefehle über ein zum Steuern des Fluggerätes ohnehin vorhandenes Fernsteuerungssystem zum Fluggerät übertragen werden. In beiden Fällen können Ansteuerbefehle alternativ oder zusätzlich auch in automatischer Weise generiert werden (z. B. durch einen "Autopiloten" oder eine anderweitige automatisch arbeitende Flugsteuerung), etwa um bei einer vorgegebenen Flugroute die Eigenschaften des Fluggerätes den lokalen Erfordernissen (auf dem jeweils aktuellen Routenabschnitt) anzupassen.

Flugzustandsparameter, die z. B. als sensorisch erfasste Meßgrößen alternativ oder zusätzlich zu Ansteuerbefehlen zur Initiierung und/oder Durchführung eines Verschwenkungsvorganges herangezogen werden können, können z. B. die momentane Fluggeschwindigkeit (bevorzugt "wahre Fluggeschwindigkeit"), die momentane aerodynamische Belastungssituation, Beschleunigungen in verschiedenen Richtungen, Drehbeschleunigungen um verschiedene Achsen etc. umfassen.

Gemäß einer Ausführungsform umfasst das Fluggerät eine im Bereich der Schwenkachsen vorgesehene Stabilisierungseinrichtung zur Arretierung der äußeren Tragflügelabschnitte im unverschwenkten Zustand gegenüber einer unerwünschten Verschwenkung durch z. B. aerodynamische Kräfte oder auch Massenträgheitskräfte. Im Falle von nach oben verschwenkbaren äußeren Tragflügelabschnitten ist insbesondere an Auftriebskräfte zu denken, die ohne eine solche Arretierung ansonsten zu einer unerwünschten Verschwenkung der äußeren Tragflügelabschnitte nach oben führen könnten.

Diese Stabilisierungseinrichtung kann gemäß einer Weiterbildung mittels einer Steuereinrichtung derart ansteuerbar sein, dass durch eine Inaktivierung oder zumindest Verringerung der Arretierwirkung die Verschwenkung durch am äußeren Tragflügelabschnitt wirkende aerodynamische Kräfte ausgelöst wird. Alternativ oder zusätzlich zu einer Ausnutzung aerodynamischer Kräfte als "Verschwenkungsantrieb" kann auch ein weiterer Antrieb, beispielsweise ein Elektroantrieb vorgesehen sein, der z. B. im Bereich einer die betreffende Schwenkachse definierenden Lagereinrichtung untergebracht sein kann.

Wenn ausgehend von dem unverschwenkten Tragflügelzustand beispielsweise eine Verschwenkung der äußeren Tragflügelabschnitte nach oben vorgesehen ist, so kann zum Bewirken dieser Verschwenkung vorteilhaft ein ohnehin an den äußeren Tragflügelabschnitten vorhandener Auftrieb genutzt werden. Hierfür ist lediglich die Arretierwirkung der Stabilisierungseinrichtung geeignet zu verringern oder ganz aufzuheben. Insbesondere in letzterem Falle ist es von Vorteil, wenn die äußeren Tragflügelabschnitte mit verstellbaren Steuerelementen (im einfachsten Fall z. B. Querrudern) versehen sind, welche für einen teilweise oder vollständig durch aerodynamische Kräfte bewerkstelligten Verschwenkungsvorgang geeignet angesteuert werden können. Dies z. B. von der erwähnten Steuereinrichtung, gegebenenfalls in Verbindung mit einem Avioniksystem.

Bevorzugt ist die Verschwenkung mit einem Verschwenkwinkel von mindestens 110°, weiter bevorzugt mindestens 120° vorgesehen. Für den Fall, dass ausgehend von einem unverschwenkten Zustand der äußeren Tragflügelabschnitte mehr als ein weiterer Verschwenkungszustand eingenommen werden kann, also mindestens eine "Zwischenstellung" in Stufen oder stufenlos angesteuert werden kann, so sind die vorstehend genannten Verschwenkwinkel als die Winkeldifferenz zwischen unverschwenktem Zustand ("gestreckte Tragflügel") und "maximal verschwenktem Zustand" (Endstellung) zu verstehen.

Der Begriff "gestreckte Tragflügel" soll insbesondere z. B. eine Anordnung der äußeren bezüglich der inneren Tragflügelabschnitte bezeichnen, bei welcher die von diesen beiden Tragflügelabschnitten aufgespannten Ebenen im Wesentlichen deckungsgleich sind oder sich allenfalls unter einem kleinen Winkel schneiden. Erfindungsgemäß verlaufen die Kanten der freien Enden der äußeren Tragflügelabschnitte im maximal verschwenkten Zustand parallel zueinander, insbesondere beide im Wesentlichen in Längsrichtung des Fluggerätes (so dass diese sich z. B. auch spaltfrei berühren können).

Erfindungsgemäß umfasst das Fluggerät eine (gegebenenfalls weitere) Stabilisierungseinrichtung zur Arretierung der freien Enden der äußeren Tragflügelabschnitte in einem verschwenkten Zustand, insbesondere z. B. dem "maximal verschwenkten" Zustand.

Eine derartige Stabilisierungseinrichtung sieht vor, dass diese an den freien Enden der äußeren Tragflügelabschnitte selbst angeordnet ist, um die freien Enden der verschwenkten Tragflügelabschnitte aneinander zu fixieren (gegebenenfalls ohne Verbindung zum Rumpf bzw. im Abstand zum Rumpf des Fluggerätes). Zur Realisierung dieser Ausführungsvariante sind erfindungsgemäß miteinander in Eingriff bringbare Koppelelemente an den freien Enden der äußeren Tragflügelabschnitte vorgesehen.

Wie bereits erwähnt kann gemäß einer Ausführungsform vorgesehen sein, dass das Fluggerät im Sinne eines Nurflüglers keinen ausgewiesenen Rumpf besitzt. Die Nutzlast kann bei dieser Ausführungsform in den Tragflügelabschnitten untergebracht werden. Der Flugantrieb kann an den Tragflächen, z. B. im Bereich der Schwenkachsen integriert werden. An einem inneren steifen Tragflügel ("innere Tragflügelabschnitte") sind an dessen seitlichen Enden die verschwenkbaren "äußeren Tragflügelabschnitte" montiert, wobei deren seitlich äußere Enden im verschwenkten Zustand bevorzugt miteinander verbunden und arretiert werden können.

In einer bevorzugten Ausführungsform ist vorgesehen, dass die Schwenkachsen derart angeordnet sind, dass sich die Spannweite des Fluggerätes durch die Verschwenkung im Wesentlichen halbieren lässt. In dieser Hinsicht kann z. B. vorgesehen sein, dass sich die Spannweite durch einen Verschwenkungsvorgang um mindestens 40 %, insbesondere um mindestens 50 % reduzieren lässt.

In einer Ausführungsform ist vorgesehen, dass die Tragflügel im unverschwenkten Zustand eine positive Vorderkantenpfeilung und/oder eine positive Hinterkantenpfeilung besitzen.

Falls die äußeren Tragflügelabschnitte als solche im unverschwenkten Zustand eine positive Pfeilung an der Vorderkante und/oder an der Hinterkante besitzen, so kann bei geeigneter Wahl der Orientierung der Schwenkachsen eine für viele Anwendungen bzw. Flugsituationen vorteilhafte negative Pfeilung an der Vorderkante bzw. an der Hinterkante im verschwenkten Zustand erreicht werden (wenn die äußeren Tragflügelabschnitte entsprechend weitgehend verschwenkt wurden).

In diesem Zusammenhang ist anzumerken, dass die Pfeilungswinkel der äußeren Tragflügel einerseits im unverschwenkten Zustand und andererseits im verschwenkten Zustand weitgehend unabhängig voneinander gewählt werden können (Ausgehend von einer bestimmten Pfeilung im unverschwenkten Zustand bestimmt sich die Pfeilung im verschwenkten Zustand maßgeblich durch die entsprechend wählbare Orientierung der Schwenkachsen).

Erfindungsgemäß ist vorgesehen, dass ein Verlauf der Vorderkante der äußeren Tragflügelabschnitte bezüglich eines Verlaufes der Vorderkante der inneren Tragflügelabschnitte nach hinten versetzt ist. Ein derartiger Flügelversatz bietet oftmals aerodynamische Vorteile, insbesondere im unverschwenkten Tragflügelzustand durch Reduktion des Luftwiderstandes.

In einer Ausführungsform weist der äußere Tragflügelabschnitt ein im Wesentlichen symmetrisches Tragflächenprofil auf. Zu bedenken ist hierbei, dass bei entsprechend weitgehender Verschwenkung des äußeren Tragflügelabschnittes dessen Oberseite und Unterseite "miteinander vertauscht" werden. Insofern wäre ein asymmetrisches Profil, welches beispielsweise im unverschwenkten Zustand einen Auftrieb liefert, oftmals aufgrund einer Abtriebswirkung im verschwenkten Zustand nachteilig. Unter diesem Aspekt ist die bereits erwähnte Ausstattung der äußeren Tragflügelabschnitte mit angesteuert verstellbaren, aerodynamisch wirksamen Steuerelementen (z. B. Ruder etc.) sehr vorteilhaft, um durch eine entsprechende Verstellung derartiger Elemente die aerodynamische Wirkung der äußeren Tragflügelabschnitte in Abhängigkeit vom aktuellen Verschwenkungszustand einzustellen. Bevorzugt sind die äußeren Tragflügelabschnitte jeweils mit einem Ruder ("Querruder") versehen, welches sich über die im Wesentlichen gesamte Länge (Spannweite) des betreffenden Tragflügelabschnittes (z. B. über wenigstens 90 % dieser Länge) erstreckt, damit es die Funktion einer so genannten Wölbklappe übernehmen kann.

Gemäß eines ersten Aspekts eines Verfahrens zur Veränderung der Geometrie eines erfindungsgemäßen Fluggerätes ist vorgesehen, dass diese Veränderung während des Fluges unter Ausnutzung von aerodynamischen Kräften erfolgt, die an den äußeren Tragflügelabschnitten wirken.

Diese Kräfte hängen beispielsweise vom momentanen Flugzustand ab, so dass durch eine geeignete Steuerung des Fluggerätes ein solcher "aerodynamischer Verschwenkungsantrieb" für beide Verschwenkungsrichtungen ermöglicht werden kann. In einer bevorzugten Weiterbildung sind die äußeren Tragflügelabschnitte selbst mit verstellbaren, aerodynamisch wirksamen Steuerelementen, bevorzugt Rudern (an den Tragflügelhinterkanten) versehen, so dass auch mehr oder weniger unabhängig vom momentanen Flugzustand eine Verschwenkung durch eine entsprechende Verstellung dieser Steuerelemente durchgeführt werden kann.

An den äußeren Tragflügelabschnitten angeordnete Steuerklappen und/oder Ruder sind hierbei bevorzugt so gestaltet, dass durch deren Verstellung eine Verschwenkung der äußeren Tragflügelabschnitte in beiden Verschwenkungsrichtungen bewirkt werden kann. Für Ruder an den Hinterkanten der äußeren Tragflügelabschnitte kann dies bedeuten, dass diese sowohl nach oben als auch nach unten aus einer Mittelebene der äußeren Tragflügelabschnitte herausgeschwenkt werden können.

Gemäß einer Weiterbildung dieses Verfahrens zur Veränderung der Geometrie des Fluggerätes ist vorgesehen, dass das Fluggerät mit einer im Bereich der Schwenkachsen angeordneten Stabilisierungseinrichtung ausgestattet ist und diese Stabilisierungseinrichtung der Verschwenkungsbewegung einen gewissen Widerstand entgegensetzt. Mit einer derartigen "Verschwenkungsbremse" kann vorteilhaft ein zu rasches Verschwenken vermieden werden. Außerdem kann durch eine derart "gedämpfte Verschwenkung" ein Steuerungsaufwand zur Ansteuerung von Steuerelementen an den äußeren Tragflügelabschnitten während der Verschwenkung vorteilhaft vereinfacht werden. Gemäß einer Variante ist vorgesehen, dass bei der Durchführung der Verschwenkung eine Verschwenkungshilfseinrichtung eingesetzt wird, mittels welcher bedarfsweise ein die Verschwenkbewegung bremsendes Drehmoment und/oder ein die Drehbewegung unterstützendes Drehmoment auf den betreffenden äußeren Tragflügelabschnitt ausgeübt werden kann. Der Bedarf für ein bremsendes Drehmoment bzw. ein unterstützendes Drehmoment kann sich z. B. bereits konstruktionsbedingt für jeweils vorbestimmte Abschnitte des Verschwenkvorganges ergeben. Alternativ oder zusätzlich kann ein solcher Bedarf auch auf Basis einer sensorischen Erfassung von Parametern der Verschwenkbewegung (z. B. momentaner Verschwenkwinkel, momentane Verschwenkwinkelgeschwindigkeit etc.) von einer Steuereinrichtung durch einen Steueralgorithmus bestimmt werden, woraufhin diese Steuereinrichtung die Verschwenkungshilfseinrichtung entsprechend ansteuert.

Gemäß einer weiteren Weiterbildung des vorstehend erläuterten Verfahrens zur Veränderung der Fluggerätgeometrie ist eine Steuerung der Verschwenkung derart vorgesehen, dass auf Basis einer sensorisch erfassten Verschwenkwinkelstellung und einer gewünschten Verschwenkungsbewegung (z. B. zeitlicher Verschwenkungsverlauf) eine Verstellung von aerodynamisch wirksamen Steuerelementen des Fluggerätes, insbesondere z. B. von Steuerklappen oder Rudern an den äußeren Tragflügelabschnitten, erfolgt. Eine solche gesteuerte oder geregelte Verstellung von Steuerelementen während der Verschwenkung kann gemäß einer Weiterbildung auch mit der Ansteuerung der vorstehend erwähnten Verschwenkungshilfseinrichtung kombiniert werden.

Gemäß eines zweiten Aspekts des Verfahrens zur Veränderung der Geometrie des Fluggerätes, der auch mit dem ersten Aspekt kombinierbar ist, ist vorgesehen, dass die Veränderung der Geometrie (durch Verschwenkung der äußeren Tragflügelabschnitte) während des Fluges in einem Flugzustand mit nennenswert verringerten aerodynamischen Kräften (insbesondere z. B. an den äußeren Tragflügelabschnitten) erfolgt. Damit wird einerseits die Gefahr verringert, dass durch die Initiierung der Verschwenkung eine zu drastische Veränderung der aerodynamischen Verhältnisse im Hinblick auf die Flugstabilität stattfindet. Andererseits wird durch diese Maßnahme im Falle eines aerodynamischen Verschwenkungsantriebes ein zu rasches Verschwenken vermieden. Falls zum Bewirken der Verschwenkung alternativ oder zusätzlich ein eigenständiger Antrieb (z. B. elektromotorischer Antrieb) bzw. die erwähnte Verschwenkungshilfseinrichtung vorgesehen ist, so resultieren vorteilhaft geringere Anforderungen an die Leistungsfähigkeit eines solchen Antriebes bzw. einer solchen Einrichtung.

Unter dem Begriff "nennenswert verringerte aerodynamische Kräfte" sollen insbesondere solche Kräfte fallen, welche ein auf die äußeren Tragflügelabschnitte wirkendes Drehmoment bezüglich der Schwenkachsen bewirken, welches höchstens 50 %, bevorzugt höchstens 25 %, desjenigen Drehmomentes beträgt, welches sich für einen normalen Geradeausflug (Reiseflug) ergibt.

In dieser Hinsicht kann beispielsweise eine Durchführung der Verschwenkung während eines so genannten Parabelfluges vorgesehen sein. Während eines Parabelfluges wirken sehr weitgehend verringerte aerodynamische Kräfte, so dass dieser spezielle Flugzustand im Rahmen der Erfindung vorteilhaft für eine Veränderung der Konfiguration des Fluggerätes genutzt werden kann.

Die Erfindung wird nachfolgend anhand eines Ausführungsbeispiels mit Bezug auf die beigefügten Zeichnungen weiter beschrieben. Es stellen dar:
- **Fig. 1**: eine schematische Draufsicht eines erfindungsgemäßen Fluggerätes gemäß eines Ausführungsbeispiels, dargestellt in einer "ersten Konfiguration" mit gestreckten Tragflügeln,
- **Fig. 2**: eine Vorderansicht des Fluggerätes von Fig. 1,
- **Fig. 3**: eine Draufsicht des Fluggerätes, jedoch dargestellt in einer "zweiten Konfiguration" mit verschwenkten äußeren Tragflügelabschnitten,
- **Fig. 4**: eine Vorderansicht des Fluggerätes von Fig. 3, und
- **Fig. 5**: eine Schnittansicht eines Tragflügels längs der Linie V-V in Fig. 3.

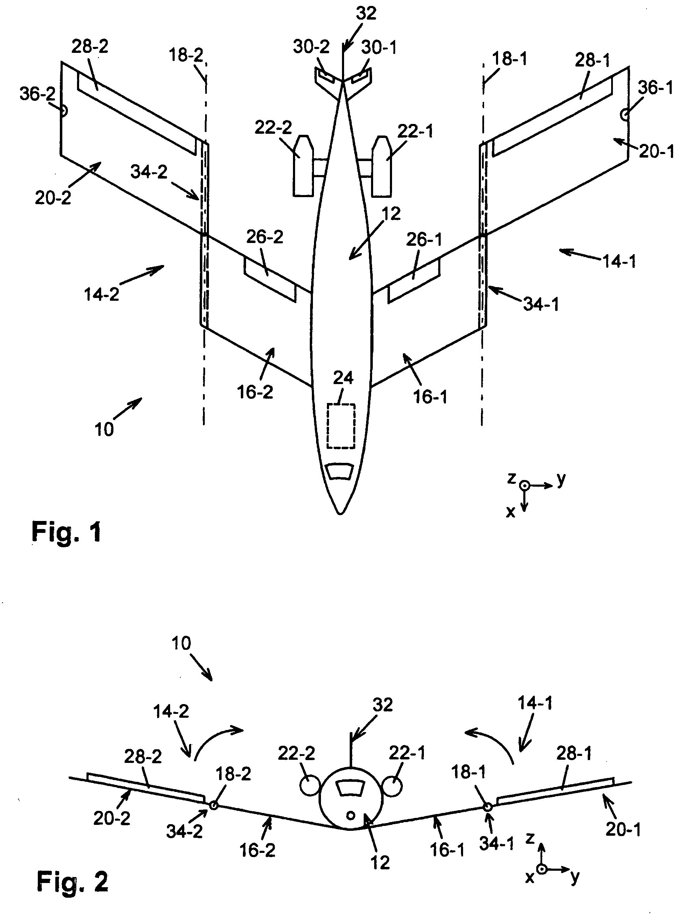

Die Fig. 1 und 2 zeigen ein Fluggerät 10, umfassend einen Rumpf 12 mit einem Paar von beiderseits in Querrichtung y davon abstehenden Tragflügeln 14-1 und 14-2, die jeweils einen stationär bezüglich des Rumpfes 12 angeordneten "inneren Tragflügelabschnitt" 16-1 bzw. 16-2 und einen sich daran anschließenden "äußeren Tragflügelabschnitt" 20-1 bzw. 20-2 aufweisen, der bezüglich des inneren Tragflügelabschnittes 16-1 bzw. 16-2 um eine in Längsrichtung (Flugrichtung) x orientierte Schwenkachse 18-1 bzw. 18-2 verschwenkbar ist.

Die Bezugszahlen von im Ausführungsbeispiel zweifach (links und rechts von der Rumpfmitte) vorgesehenen, in ihrer Wirkung jedoch analogen Komponenten, wie z. B. den Tragflügeln 14-1 und 14-2, sind durchnumeriert (jeweils ergänzt durch einen Bindestrich und die Zahl "1" bzw. "2"). Auf einzelne solcher Komponenten oder auf die Gesamtheit solcher Komponenten wird im Folgenden auch durch die nicht-ergänzte Bezugszahl Bezug genommen.

Im dargestellten Ausführungsbeispiel ist der Rumpf 12 des Fluggerätes 10 in Längsrichtung x langgestreckt und etwa "zigarrenförmig". Zum Antrieb sind im dargestellten Beispiel Strahltriebwerke 22 in einem Heckbereich des Rumpfes 12 vorgesehen.

Die Steuerung des Fluggerätes 10 erfolgt mittels eines Avioniksystems 24 über angesteuert verstellbare, aerodynamisch wirksame Steuerelemente. Die Steuerelemente umfassen im dargestellten Beispiel innere Querruder 26 (an den inneren Tragflügelabschnitten 16), äußere Querruder 28 (an den äußeren Tragflügelabschnitten 20), Höhenruder 30 (an einem Höhenleitwerk) und ein Seitenruder (in den Figuren nicht ersichtlich, an einem Seitenleitwerk 32).

Eine Besonderheit des dargestellten Beispiels ist ein in Längsrichtung x betrachtet vorliegender Versatz der äußeren Tragflügelabschnitte 20-1 bzw. 20-2 gegenüber den inneren Tragflügelabschnitten 16-1 bzw. 16-2 nach hinten. Dieser Versatz bietet aerodynamische Vorteile und ermöglicht es abweichend vom dargestellten Beispiel insbesondere auf das Höhenleitwerk mitsamt den Höhenrudern 30 zu verzichten.

Mit der Verschwenkbarkeit der äußeren Tragflügelabschnitte 20 um die Schwenkachsen 18 lässt sich in nachfolgend detaillierter beschriebener Weise die Geometrie bzw. "Konfiguration" des Fluggerätes 10 variieren. Mit dieser Variation lässt sich während des Fluges vorteilhaft eine Anpassung des Flugverhaltens an verschiedene Flugsituationen erzielen.

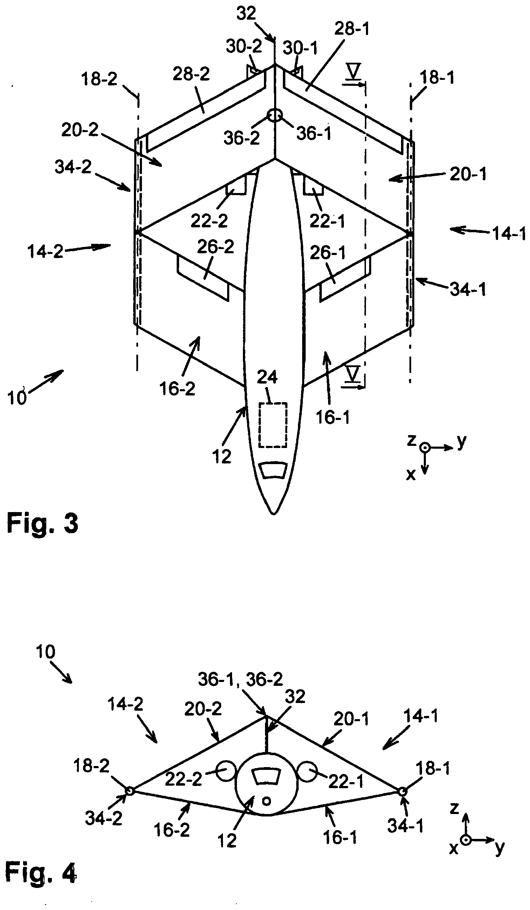

Ausgehend von der in den Fig. 1 und 2 dargestellten "ersten Konfiguration" des Fluggerätes 10 ist im dargestellten Beispiel nur eine weitere Konfiguration vorgesehen, die nachfolgend als "zweite Konfiguration" bezeichnet wird und in den Fig. 3 und 4 dargestellt ist.

Während die erste Konfiguration (Fig. 1 und 2) mit den in Querrichtung y "gestreckten Tragflügeln" insbesondere für Start und Landung sowie einen energieeffizienten Reiseflug vorgesehen ist, bietet die zweite Konfiguration (Fig. 3 und 4), bei welcher die äußeren Tragflügelabschnitte 20 aus ihrer Ausgangsstellung heraus um etwa 140° nach oben verschwenkt sind (vgl. Pfeile in Fig. 2), ein wendigeres und agileres Flugverhalten des Fluggerätes 10.

Die Schwenkachsen 18 befinden sich im dargestellten Beispiel etwa im Bereich der jeweiligen Spannweiten-Mitte (in Querrichtung y betrachtet) der beiden Tragflügel 14, so dass bei der Verschwenkungsendstellung gemäß der zweiten Konfiguration (Fig. 3 und 4) vorteilhaft einander unmittelbar benachbarte bzw. sich berührende freie Enden der Tragflügelabschnitte 20 resultieren. Damit können diese freien Enden in der zweiten Konfiguration durch in gegenseitigen Eingriff bringbare Koppelmittel 36-1 und 36-2 aneinander fixiert werden, so dass sich ein sehr fester, von vorne betrachtet (vgl. Fig. 4) etwa rautenförmiger Verbund ergibt. Große Auftriebs- oder Abtriebskräfte werden durch diesen Verbund leichter aufgenommen. Vorteilhaft ergeben sich in der zweiten Konfiguration außerdem vergleichsweise "kurze Flügel" (in Richtung y betrachtet), die im dargestellten Beispiel vorne und hinten mit dem Rumpf 12 verbunden sind, so dass sich auch von oben betrachtet (vgl. Fig. 3) ein etwa rautenförmiger Verbund ergibt. Die in der zweiten Konfiguration bei stark belastenden Flugmanövern resultierenden Biegemomente im Bereich der Tragflügel 14 sind vorteilhaft vergleichsweise gering, da die Hebelarme gewissermaßen halbiert werden (im Vergleich zur ersten Konfiguration).

Das Avioniksystem 24 kontrolliert die Verstellungen der Steuerelemente für die normale Steuerung des Fluggerätes 10, und darüber hinaus auch die erfindungsgemäß vorgesehenen Verschwenkungsvorgänge zur Veränderung der Konfiguration des Fluggerätes 10 während des Fluges. Gemäß einer bevorzugten Ausführung erfolgt die Konfigurationsveränderung in einem Flugzustand mit nennenswert verringerten aerodynamischen Kräften an den äußeren Tragflügelabschnitten 20, beispielsweise während eines so genannten Parabelfluges. Damit können während der Verschwenkung die aerodynamischen Lasten an den Tragflügeln 14 vorteilhaft gering gehalten werden.

Abweichend vom dargestellten Beispiel könnten die Schwenkachsen 18 auch etwas abweichend von der Längsrichtung x orientiert sein, beispielsweise mit einer Abweichung von der Längsrichtung x von weniger als 30°. Falls die Schwenkachsen 18 nicht exakt in Längsrichtung x orientiert sind, so ist gemäß einer bevorzugten Ausführungsvariante vorgesehen, dass ein Neigungswinkel der Schwenkachsen 18 bezüglich der Horizontalebene (x-y-Ebene) kleiner als ein Neigungswinkel bezüglich derjenigen Vertikalebene (x-z-Ebene) ist, die durch die Längsrichtung x und die Vertikalrichtung z aufgespannt wird.

Der Übergang zwischen den beiden Konfigurationen wird mittels des Avioniksystems 24 durch eine automatische Verschwenkung der äußeren Tragflügelabschnitte realisiert, wobei die Initiierung eines entsprechenden Verschwenkvorganges infolge eines Ansteuerbefehls und/oder in Abhängigkeit von wenigstens einem sensorisch erfassten Flugzustandsparameter (z. B. Fluggeschwindigkeit) erfolgen kann. Gemäß einer Weiterbildung versetzt das Avioniksystem 24 nach einer Initiierung eines Verschwenkvorganges das Fluggerät 10 in einen Flugzustand mit nennenswert verringerten aerodynamischen Kräften, beispielsweise einen so genannten Parabelflug, um einen möglichst gut kontrollierbaren Verschwenkungsvorgang zu ermöglichen.

Vorteilhaft wird die Verschwenkung unter Ausnutzung von aerodynamischen Kräften bewerkstelligt, die während des Fluges an den äußeren Tragflügelabschnitten 20 bzw. deren Querrudern 28 wirken. Im dargestellten Beispiel wird daher auf einen eigens zur Verschwenkung vorgesehenen Antrieb (z. B. Elektroantrieb) verzichtet.

Ausgehend von der ersten Konfiguration (Fig. 1 und 2) kann beispielsweise nach Aufhebung einer Arretierwirkung einer im Bereich der Schwenkachsen 18 vorgesehenen Lagereinrichtung 34 eine aerodynamisch getriebene Verschwenkung der äußeren Tragflügelabschnitte 20 (hier: nach oben um ungefähr 140°) in die zweite Konfiguration (Fig. 3 und 4) erfolgen.

Während eines Verschwenkungsvorganges können die Lagereinrichtungen 34 eine gewisse Bremskraft (bzw. ein Bremsdrehmoment) bereitstellen, um ein zu rasches Verschwenken zu vermeiden. Eine solche Bremswirkung kann z. B. auf Basis einer viskosen Ölreibung in einer hydraulischen Bremseinrichtung bereitgestellt werden. Gegebenenfalls kann die betreffende Bremseinrichtung in Abhängigkeit von sensorisch erfassten Flugzustandsparametern ansteuerbar sein und/oder eine vom momentanen Verschwenkwinkel abhängige Bremswirkung bereitstellen.

Während eines Fluges in der ersten Konfiguration (Fig. 1 und 2) können dieselben Lagereinrichtungen 34 demgegenüber als Stabilisierungseinrichtung zur sicheren Arretierung der äußeren Tragflügelabschnitte 20 im unverschwenkten Zustand (erste Konfiguration) gegenüber einer unerwünschten Verschwenkung fungieren.

Je nach aktuellem Flugzustand kann zum Bewirken der Verschwenkung ein entsprechend kontrollierter Ruderausschlag der äußeren Querruder 28 erforderlich sein oder zur Erzielung eines "wohldefinierten" Verschwenkvorganges mit einer gewünschten Geschwindigkeit vorteilhaft eingesetzt werden. Hierfür kann beispielsweise mittels des Avioniksystems 24 eine geeignete Ansteuerung der äußeren Querruder 28 und/oder anderer der Steuerelemente auf Basis von sensorisch erfassten Flugzustandsparametern (insbesondere umfassend den momentanen Verschwenkungswinkel) erfolgen.

Ebenfalls "aerodynamisch angetrieben" kann ausgehend von der zweiten Konfiguration (Fig. 3 und 4) durch geeignete Ansteuerung der Steuerelemente durch das Avioniksystem 24 auch wieder eine Konfigurationsänderung zurück in die erste Konfiguration (Fig. 1 und 2) initiiert bzw. durchgeführt werden.

Im dargestellten Beispiel ist somit für beide Verschwenkungsrichtungen vorteilhaft kein zusätzlicher Antrieb (z. B. Elektroantrieb im Bereich der Lagereinrichtungen 34) erforderlich, um die Tragflügel 14 in die jeweils gewünschte Konfiguration zu bringen.

Auch in der zweiten Konfiguration (Fig. 3 und 4) erfolgt eine vorteilhafte Stabilisierung der Tragflügelkonfiguration durch eine weitere Stabilisierungseinrichtung, die im dargestellten Beispiel aus den bereits erwähnten, miteinander in Eingriff bringbaren Koppelmitteln 36-1 und 36-2 besteht, welche an den freien Enden der äußeren Tragflügelabschnitte 20-1 bzw. 20-2 angeordnet sind und zur Arretierung der freien Enden der äußeren Tragflügelabschnitte im maximal verschwenkten Zustand (zweite Konfiguration) dienen.

Durch die ebenfalls mittels des Avioniksystems 24 angesteuerten Koppelmittel 36 werden die freien Enden der äußeren Tragflügelabschnitte 20 im dargestellten Beispiel in einer zweiten Konfiguration aneinander arretiert. Alternativ oder zusätzlich könnte durch entsprechend modifizierte Koppelmittel 36 und Anordnung weiterer Koppelmittel z. B. auch eine Arretierung dieser Enden am Rumpf 12 oder einem stationär am Rumpf 12 angeordneten Teil des Fluggerätes 10 vorgesehen sein. Hierfür geeignete Teile des Rumpfes 12 sind z. B. das Seitenleitwerk 32 und das Höhenleitwerk.

Alternativ oder zusätzlich könnte zur Stabilisierung der zweiten Konfiguration auch eine Arretierwirkung vorgesehen werden, die von den Lagereinrichtungen 34 (im Bereich der Schwenkachsen 18) bereitgestellt wird. Falls durch die Lagereinrichtungen 34 beispielsweise ohnehin eine bereits erwähnte Verschwenkungsbremse bzw. Verschwenkungshilfseinrichtung gebildet wird, so kann die Arretierwirkung konstruktiv vorteilhaft als eine extreme Einstellung dieser Lagereinrichtungen 34, mit "blockierender Bremswirkung" vorgesehen werden.

Gemäß einer bevorzugten Ausgestaltung, die auch im dargestellten Beispiel vorgesehen ist, verlaufen die Kanten der freien Enden der äußeren Tragflügelabschnitte im maximal verschwenkten Zustand (hier: zweite Konfiguration) parallel zueinander, insbesondere beide im Wesentlichen in Längsrichtung x, so dass diese sich z. B. spaltfrei berühren und/oder die erwähnten Koppelmittel in einfacher Weise zur Stabilisierung der zweiten Konfiguration eingesetzt werden können.

Abweichend vom dargestellten Ausführungsbeispiel könnte außer der ersten und zweiten Konfiguration auch wenigstens eine "Zwischenstellung" mit einem Verschwenkwinkel von weniger als 140° bezüglich der ersten Konfiguration vorgesehen sein, in welcher die Lagereinrichtungen 34 eine entsprechende Arretierung der äußeren Tragflügelabschnitte 20 gegenüber einer Verschwenkung vorsehen könnten.

Im dargestellten Beispiel besitzen sowohl die inneren Tragflügelabschnitte 16 als auch die äußeren Tragflügelabschnitte 20 in der ersten Konfiguration (Fig. 1 und 2) jeweils eine positive Vorderkantenpfeilung und eine positive Hinterkantenpfeilung. Nach Verschwenkung in die zweite Konfiguration (Fig. 3 und 4) ergibt sich für die äußeren Tragflügelabschnitte 20 demgegenüber eine negative Vorderkantenpfeilung und eine negative Hinterkantenpfeilung.

Durch diese "Pfeilungskombination" in der zweiten Konfiguration, vorne positive Pfeilung und hinten negative Pfeilung, wird eine gute Flugstabilität und Steuerbarkeit erreicht. Es ergibt sich ein günstiger Längsabstand zwischen dem Massenschwerpunkt und dem aerodynamischen Angriffspunkt. Außerdem wird durch die erwähnten Pfeilungen der Tragflügelabschnitte 16 und 20 eine vorteilhaft verringerte Radarsignatur von vorne und von hinten erzielt. Schließlich ergibt sich ein geringer Wellenwiderstand im transsonischen und supersonischen Geschwindigkeitsbereich.

Abweichend vom dargestellten Beispiel könnte in der zweiten Konfiguration jedoch ebenfalls eine positive Pfeilung der Tragflügelabschnitte 20 vorgesehen sein. Um das dargestellte Beispiel in dieser Weise zu modifizieren, könnte z. B. eine Orientierung der Schwenkachsen 18 gewählt werden, die zwar ebenfalls in der Horizontalebene (x-y-Ebene) verläuft, jedoch in einem Winkel abweichend von der Vertikalebene (x-z-Ebene) verläuft, der größer als der "Pfeilungswinkel" der Tragflügelabschnitte 20 in der ersten Konfiguration (hier: etwa 30°) ist.

Außerdem wäre abweichend vom dargestellten Beispiel auch eine Anordnung denkbar, bei welcher die äußeren Tragflügelabschnitte 20 im unverschwenkten Zustand eine Vorderkantenpfeilung und/oder Hinterkantenpfeilung von annähernd 0° (z. B. kleiner als 10°) aufweisen.

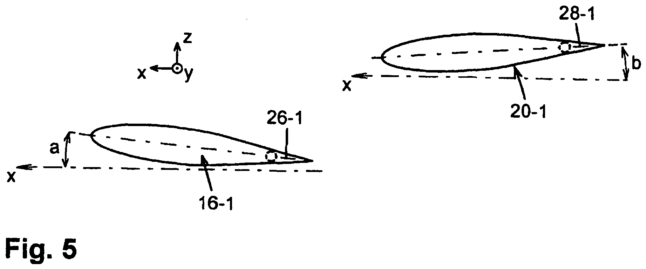

Fig. 5 ist eine Schnittansicht längs der Linie V-V in Fig. 3 und veranschaulicht die relative Anordnung und Orientierung der Profile der Tragflügelabschnitte 16-1 und 20-1 in der zweiten Konfiguration.

Der innere Tragflügelabschnitt 16-1 besitzt wie dargestellt einen (für beide Konfigurationen) identischen positiven Anstellwinkel a gegenüber der Anströmung in Längsrichtung x. In der in Fig. 5 dargestellten zweiten Konfiguration besitzt der äußere Tragflügelabschnitt 20 (unter Berücksichtigung der Verschwenkung um die hier in Längsrichtung x orientierten Schwenkachsen 18) einen negativen Anstellwinkel mit dem Betrag b.

Im Hinblick auf vorteilhafte Flugeigenschaften und Flugstabilität in beiden Konfigurationen ist der Betrag des (positiven) Anstellwinkels a bevorzugt größer als der Betrag des Anstellwinkels b.

Um durch einen Vorzeichenwechsel des Anstellwinkels b beim Übergang zwischen den beiden Konfigurationen der äußeren Tragflügel eine entsprechende Umkehr der aerodynamischen Auftriebswirkung zu kompensieren bzw. zu vermeiden, sind die im dargestellten Beispiel sich über die im Wesentlichen gesamte Länge (in Querrichtung y) erstreckenden äußeren Querruder 28 sehr hilfreich. Diese Querruder 28 können in diesem Fall gewissermaßen als "Wölbungsklappen" fungieren, um eine im jeweiligen Konfigurations- bzw. Verschwenkungszustand gewünschte Auftriebs- oder Abtriebswirkung gezielt einstellen zu können.

Außerdem ist es in dieser Hinsicht bevorzugt, wenn wie dargestellt zumindest der äußere Tragflügelabschnitt 20 ein bezüglich seiner Profilsehne im Wesentlichen symmetrisches Profil aufweist.

Durch die Ausstattung sowohl der inneren Tragflügelabschnitte 16 als auch der äußeren Tragflügelabschnitte 20 mit Steuerflächen in Form der Querruder 26 bzw. 28, welche sich in der zweiten Konfiguration in Längsrichtung x betrachtet "vorne und hinten" befinden, können vorteilhaft sehr direkte und effiziente Änderungen des Gesamtauftriebs erzielt werden. In diesem Falle können bei der Steuerung des Fluggerätes vorteilhaft die Querruder wie Höhenruder eingesetzt und symmetrisch ausgeschlagen werden. Bei konventionellen Fluggeräten müsste hierfür zunächst um die Querachse (Richtung y) rotiert werden, um die Anstellwinkel an den Tragflügeln 14 und somit den Auftrieb zu verändern. Die Folge ist eine zeitverzögerte Wirkung.

## Patentansprüche

1. Fluggerät mit variabler Geometrie zur Anpassung des Flugverhaltens, umfassend einen Rumpf (12) mit einem Paar von beiderseits in Querrichtung (y) davon abstehenden Tragflügeln (14), die jeweils einen stationär bezüglich des Rumpfes (12) angeordneten inneren Tragflügelabschnitt (16) und einen sich daran anschließenden, um eine Schwenkachse (18) verschwenkbaren äußeren Tragflügelabschnitt (20) mit einem freien Ende aufweisen; und eine Stabilisierungseinrichtung zur Arretierung der freien Enden der äußeren Tragflügelabschnitte (20) in einem maximal verschwenkten Zustand der äußeren Tragflügelabschnitte (20), **dadurch gekennzeichnet, dass** die Schwenkachse (18) in einer Richtung orientiert ist, die um maximal 40° von der Längsrichtung (x) des Fluggerätes abweicht, wobei ein Verlauf der Vorderkante der äußeren Tragflügelabschnitte (20) bezüglich eines Verlaufes der Vorderkante der inneren Tragflügelabschnitte (16) nach hinten versetzt ist; die äußeren Tragflügelabschnitte (20) vollständig hinter den inneren Tragflügelabschnitten (16) angeordnet sind; die äußeren Tragflügelabschnitte (20) im maximal verschwenkten Zustand parallel zueinander verlaufende Kanten der freien Enden umfassen; und die Stabilisierungseinrichtung miteinander in Eingriff bringbare Koppelmittel (36-1; 36-2) umfasst, welche an den freien Enden angeordnet sind und zur Arretierung der freien Enden im maximal verschwenkten Zustand dienen.

2. Fluggerät nach Anspruch 1, ferner umfassend eine Steuereinrichtung (24) zur Ansteuerung einer automatischen Verschwenkung der äußeren Tragflügelabschnitte (20) während des Fluges infolge eines Ansteuerbefehls und/oder in Abhängigkeit von wenigstens einem Flugzustandsparameter.

3. Fluggerät nach einem der vorangehenden Ansprüche, wobei die Verschwenkung unter Ausnutzung von aerodynamischen Kräften bewerkstelligt wird, die während des Fluges an den äußeren Tragflügelabschnitten (20) wirken.

4. Fluggerät nach einem der vorangehenden Ansprüche, ferner umfassend eine im Bereich der Schwenkachsen (18) vorgesehene Stabilisierungseinrichtung zur Arretierung der äußeren Tragflügelabschnitte (20) im unverschwenkten Zustand gegenüber einer unerwünschten Verschwenkung durch aerodynamische Kräfte.

5. Fluggerät nach Anspruch 4, wobei die Stabilisierungseinrichtung mittels einer Steuereinrichtung (24) derart ansteuerbar ist, dass durch eine Inaktivierung oder zumindest Verringerung der Arretierwirkung die Verschwenkung durch am äußeren Tragflügelabschnitt (20) wirkende aerodynamische Kräfte vorgesehen wird.

6. Fluggerät nach einem der vorangehenden Ansprüche, wobei die Verschwenkung mit einem Verschwenkwinkel von mindestens 110°, bevorzugt mindestens 120° ermöglicht ist.

7. Fluggerät nach einem der vorangehenden Ansprüche, wobei sich die Kanten der freien Enden im maximal verschwenkten Zustand spaltfrei berühren.

8. Fluggerät nach einem der vorangehenden Ansprüche, wobei die Schwenkachsen (18) derart angeordnet sind, dass sich die Spannweite des Fluggerätes durch die Verschwenkung im Wesentlichen halbiert.

9. Fluggerät nach einem der vorangehenden Ansprüche, wobei die Tragflügel (14) im unverschwenkten Zustand eine positive Vorderkantenpfeilung und/oder eine positive Hinterkantenpfeilung besitzen.

10. Verfahren zur Veränderung der Geometrie eines Fluggerätes (10) nach einem der Ansprüche 1 bis 9 während des Fluges unter Ausnutzung von aerodynamischen Kräften, die an den äußeren Tragflügelabschnitten (20) wirken und/oder in einem Flugzustand mit nennenswert verringerten aerodynamischen Kräften an den äußeren Tragflügelabschnitten (20).

## Claims

1. Aircraft with variable geometry for adapting the flight behaviour, comprising a fuselage (12) with a pair of aerofoils (14) projecting therefrom on both sides in the transverse direction (y), which each have an inner aerofoil section (16) arranged to be stationary with respect to the fuselage (12) and an outer aerofoil section (20) adjacent thereto and pivotable about a pivot axis (18) and having a free end, and a stabilizing device for locking the free ends of the outer aerofoil sections (20) in a maximum pivoted state of the outer aerofoil sections (20),
**characterized in that** the pivot axis (18) is oriented in a direction which deviates by at most 40° from the longitudinal direction (x) of the aircraft, wherein a profile of the leading edge of the outer aerofoil sections (20) is offset rearward with respect to a profile of the leading edge of the inner aerofoil sections (16), the outer aerofoil sections (20) are arranged completely behind the inner aerofoil sections (16), the outer aerofoil sections (20) comprise edges of the free ends that extend parallel to each other in the maximum pivoted state, and the stabilization device comprises coupling means (36-1; 36-2) which can be brought into engagement with each other, which are arranged at the free ends and which are used to lock the free ends in the maximum pivoted state.

2. Aircraft according to Claim 1, further comprising a control device (24) for activating automatic pivoting of the outer aerofoil sections (20) during the flight as a result of an activation command and/or as a function of at least one flight state parameter.

3. Aircraft according to one of the preceding claims, wherein the pivoting is effected by utilizing aerodynamic forces which act on the outer aerofoil sections (20) during the flight.

4. Aircraft according to one of the preceding claims, further comprising a stabilizing device, provided in the region of the pivot axes (18), for locking the outer aerofoil sections (20) in the un-pivoted state against undesired pivoting as a result of aerodynamic forces.

5. Aircraft according to Claim 4, wherein the stabilizing device can be activated by means of a control device (24) in such a way that, by means of inactivating or at least reducing the locking effect, the pivoting is provided by aerodynamic forces acting on the outer aerofoil section (20).

6. Aircraft according to one of the preceding claims, wherein pivoting is made possible with a pivoting angle of at least 110°, preferably at least 120°.

7. Aircraft according to one of the preceding claims, wherein the edges of the free ends touch without any gap in the maximum pivoted state.

8. Aircraft according to one of the preceding claims, wherein the pivot axes (18) are arranged in such a way that the span of the aircraft is substantially halved by the pivoting.

9. Aircraft according to one of the preceding claims, wherein the aerofoils (14) have a positive leading-edge sweep and/or a positive trailing edge sweep in the un-pivoted state.

10. Method for varying the geometry of an aircraft (10) according to one of Claims 1 to 9 during the flight by utilizing aerodynamic forces which act on the outer aerofoil sections (20) and/or in a flight state with significantly reduced aerodynamic forces on the outer aerofoil sections (20) .

## Revendications

1. Aéronef de géométrie variable, pour l'adaptation du comportement en vol, comprenant un fuselage (12) avec une paire d'ailes portantes (14) saillant de part et d'autre de celui-ci dans la direction transversale (y), qui présentent chacune une portion d'aile portante interne (16) disposée de manière stationnaire par rapport au fuselage (12) et une portion d'aile portante externe (20) s'y raccordant, pouvant pivoter autour d'un axe de pivotement (18), avec une extrémité libre ; et
un dispositif de stabilisation pour bloquer les extrémités libres des portions d'aile portante externes (20) dans un état pivoté au maximum des portions d'aile portante externes (20), **caractérisé en ce que** l'axe de pivotement (18) est orienté dans une direction qui s'écarte au maximum de 40° de la direction longitudinale (x) de l'aéronef, une allure de l'arête avant des portions d'aile portante externes (20) par rapport à une allure de l'arête avant des portions d'aile portante internes (16) étant décalée vers l'arrière ; les portions d'aile portante externes (20) étant disposées complètement derrière les portions d'aile portante internes (16) ; les portions d'aile portante externes (20), dans l'état pivoté au maximum, comprenant des arêtes des extrémités libres s'étendant parallèlement les unes aux autres ; et le dispositif de stabilisation comprenant des moyens d'accouplement (36-1 ; 36-2) pouvant être amenés en prise les uns avec les autres, qui sont disposés au niveau des extrémités libres et qui servent à bloquer les extrémités libres dans l'état pivoté au maximum.

2. Aéronef selon la revendication 1, comprenant en outre un dispositif de commande (24) pour commander un pivotement automatique des portions d'aile portante externes (20) pendant le vol en réponse à un ordre de commande et/ou en fonction d'au moins un paramètre d'état de vol.

3. Aéronef selon l'une quelconque des revendications précédentes, dans lequel le pivotement est réalisé en utilisant des forces aérodynamiques qui agissent pendant le vol sur les portions d'aile portante externes (20).

4. Aéronef selon l'une quelconque des revendications précédentes, comprenant en outre un dispositif de stabilisation prévu dans la région des axes de pivotement (18) pour bloquer les portions d'aile portante externes (20) dans l'état non pivoté par rapport à un pivotement indésirable par des forces aérodynamiques.

5. Aéronef selon la revendication 4, dans lequel le dispositif de stabilisation peut être commandé au moyen d'un dispositif de commande (24) de telle sorte que par désactivation ou au moins réduction de l'effet de blocage, le pivotement soit prévu par des forces aérodynamiques agissant sur la portion d'aile portante externe (20).

6. Aéronef selon l'une quelconque des revendications précédentes, dans lequel le pivotement est permis avec un angle de pivotement d'au moins 110°, de préférence d'au moins 120°.

7. Aéronef selon l'une quelconque des revendications précédentes, dans lequel les arêtes des extrémités libres dans l'état pivoté au maximum sont en contact sans interstice.

8. Aéronef selon l'une quelconque des revendications précédentes, dans lequel les axes de pivotement (18) sont disposés de telle sorte que l'envergure de l'aéronef soit essentiellement divisée en deux par le pivotement.

9. Aéronef selon l'une quelconque des revendications précédentes, dans lequel les ailes portantes (14), dans l'état non pivoté, possèdent un fléchage de bord d'attaque positif et/ou un fléchage de bord de fuite positif.

10. Procédé destiné à faire varier la géométrie d'un aéronef (10) selon l'une quelconque des revendications 1 à 9, pendant le vol, en utilisant des forces aérodynamiques qui agissent sur les portions d'aile portante externes (20) et/ou dans un état de vol avec des forces aérodynamiques réduites de manière notable au niveau des portions d'aile portante externes (20).
